# EUROPEAN PATENT APPLICATION

(11) **EP 3 889 697 A1**
(43) Date of publication of application: **06.10.2021**
(21) Application number: 20167491.8
(22) Date of filing: 01.04.2020
(51) Int. Cl.: G05B 15/02, G05B 19/042

(54) **METHOD FOR OPERATING A WIND TURBINE WITH CONTROLLED OPERATION OF SENSORS**

(71) Applicant: Siemens Gamesa Renewable Energy A/S, 7330 Brande (DK)
(72) Inventor: Manjunatha, Vinay Kumar, 560024 Bengaluru (IN)
(74) Representative: Aspacher, Karl-Georg

(57) **Abstract**

Disclosed is a method for operating a wind turbine (20), wherein the wind turbine (20) has at least one component device (30; 64-1 - 64-6), of which an operational fitness is monitorable by a plurality of sensor devices (31 - 33; 61 - 63; 65-1 - 65-6) associated to the component device (30; 64-1 - 64-6), wherein each sensor device(31 - 33; 61 - 63; 65-1 - 65-6) is configured to measure an operational parameter of the component device (30; 64-1 - 64-6), wherein the operational parameter is indicative of the operational fitness of the component device (30; 64-1 - 64-6). The method has: grouping a plurality of sensor devices (31 - 33; 61 - 63; 65-1 - 65-6) associated to a component device (30; 64-1 - 64-6) of the wind turbine (20) in sensor categories including priority 1 and priority 2, and in particular doing so in preparation of, or for example during, an operation of a wind turbine (20). Herein, priority 1 is attributed to a sensor device (31; 61) which is configured to measure an operational parameter that is critical for an operational fitness of the component device (30; 64-1 - 64-6). The component device (30; 64-1 - 64-6) is critical for the operational fitness or not of the wind turbine (20). The method further has, during operation of the wind turbine (20): running at least one predictive model for the component device (30; 64-1 - 64-6), and checking if the predictive model indicates an issue, which is capable to negatively affect the operational fitness of the component device (30; 64-1 - 64-6), if no issue is anticipated by the predictive model, switching off any priority 2 sensor device (32; 62), while continuing to operate including for example read out periodically any priority 1 sensor device (31; 61).

## Description

### Technical area

The present disclosure relates generally to methods for operating an individual wind turbine including a controlling of sensor devices. In particular, the method relates to a method for operating a wind turbine including a controlling of sensor devices of the wind turbine, a method for operating a wind turbine within a wind farm, and a wind turbine configured to be operated according to one and/or both of said methods.

### Background art

Wind turbines are equipped with a plurality of different types of sensors, which are configured to measure different quantities and different types of quantities that are taken to be indicative of an operational state and/or an operational fitness of the wind turbine. Types of sensors include temperature sensors, strain sensors, vibration sensors, electric power sensors, electric current sensors, and wind sensors including in particular wind speed sensors. For example, temperature sensors are used to measure a temperature of, for example, a stator segment or a stator segment winding, a coolant that is used in a, for example primary coolant circuit for transporting heat away from a stator segment and/or a stator segment winding, a heat exchanger that is used to transfer heat from the primary coolant circuit to a secondary coolant circuit, a coolant that is used in a secondary coolant circuit, a cooling element that is used to transfer heat from a primary or secondary coolant circuit to the ambient environment. Strain sensors and/or vibration sensors are used to measure a, for example wind and/or mechanical load on the wind turbine. Vibration sensors are used mainly measuring, analyzing, displaying proximity, acceleration, displacement at different wind speeds and wind turbine operations, for example, to measure the even and/or smooth running of bearings of the wind turbine, including the bearing coupling the wind rotor to the electric generator, the bearings coupling the blades to the hub, the bearings coupling the rotor to the stator of the generator, or the bearing coupling the nacelle to the tower. Wind speed sensors are used to measure, for example ambient, wind speed, which in turn impacts the load on the wind turbine. Run time sensors are used to measure a run time or operation time of a mechanical or electric component of the wind turbine.

Conventionally, wind turbines and wind farms having a plurality of wind turbines are running almost continuously, for example for many years. At the same time, all the sensors are switched on continuously during operation and read out continuously, quasi-continuously or at least periodically to capture the value of the quantity to be measured, irrespective of meteorological conditions, including wind speed. The continuous operation of sensors is carried out irrespective of an operational fitness of the wind turbine including all components thereof that may be subject to wearing or sensitive to adverse meteorological conditions, irrespective of meteorological conditions including in particular wind speed, and irrespective of geographical conditions including a location of wind turbine in a position shadowed from wind or in a position exposed to wind.

The conventional continuous or quasi-continuous operation of sensors is costly in various respects. The operation of a sensor consumes electric power required to operate, control and read out a sensor. Also, the operation of a sensor continuously increases the operation time of a sensor, while the overall lifetime of the sensor is limited or rated until the sensor needs to be replaced. Still further the operation of a sensor continuously increases the amount of produced measurement data, and the amount of storage space required to store produced measurement data, which storage space does not only cost storage hardware but also monetary expenses for operating the storage hardware or for renting storage hardware in the cloud.

### Summary of the disclosure

The present disclosure generally aims at reducing the cost of sensor utilization in a wind turbine, including electric power consumption required for sensor operation, and data storage space consumption used for storing measured sensor data.

It is an object of the present disclosure to provide a method of operating a wind turbine having a plurality of component devices that are subject to wear and possibly sensitive to adverse ambient meteorological conditions, and a plurality of sensor devices which measure operational parameters of a component device, wherein a sensor device may be the switched off if possible and switched on of if necessary to ensure a safe operation of the wind turbine. This object is generally solved in that sensors are, instead of being operated continuously, operated in a controlled manner as a function of for example operational fitness of one or more components of the wind turbine, ambient meteorological conditions, and geological location of the wind turbine.

This object is solved in particular by the subjects having the features according to the independent patent claims. Further embodiment examples are shown in the dependent claims.

According to a first embodiment example of the present disclosure, there is established a method for operating a wind turbine, wherein the wind turbine has at least one component device, of which an operational fitness is monitorable by a plurality of sensor devices associated to the component device, wherein each sensor device is configured to measure an operational parameter of the component device, wherein the operational parameter is indicative of the operational fitness of the component device. This method has: grouping a plurality of sensor devices associated to a component device of the wind turbine in sensor categories including priority 1 and priority 2, and in particular doing so in preparation of, or for example during, an operation of a wind turbine, wherein priority 1 is attributed to a sensor device which is configured to measure, in particular directly, an operational parameter that is critical for an operational fitness of the component device, wherein the component device is critical for the operational fitness of the wind turbine. The method further has, during operation of the wind turbine, running at least one predictive model for the component device, and checking if the predictive model indicates an issue, which is capable to negatively affect the operational fitness of the component device, and if no issue is anticipated by the predictive model, switching off any priority 2 sensor device, while continuing to operate including for example to read out periodically any priority 1 sensor device.

According to a second embodiment example of the present disclosure, there is established a method for operating a wind turbine in a wind farm, wherein the wind turbine has at least one component device, of which an operational fitness is monitorable by a plurality of sensor devices associated to the component device, wherein each sensor device is configured to measure an operational parameter of the component device, wherein the operational parameter is indicative of the operational fitness of the component device. The wind farm has a plurality of wind turbines and is configured to be operated such that a first portion of the plurality of wind turbines is each configured to operate as a type 1 wind turbine, which means that all sensor devices of a wind turbine are switched on continuously including for example read out periodically, and a second portion of the plurality of wind turbines is each configured to operate as a type 2 wind turbine, which means that at least one of the sensor devices of a wind turbine is operable in a controlled manner in that the wind turbine is operable according to the first exemplary embodiment of the present disclosure. This method has: for each wind turbine, deciding on the basis of a geographical location of the wind turbine in the wind farm, whether the wind turbine shall be operated as a type 1 wind turbine or can be operable as a type 2 wind turbine. This method further has for each wind turbine, which is operable as a type 2 wind turbine: running at least one predictive model for a component device, which is decisive for an operational fitness of the wind turbine, and checking if the predictive model indicates an issue, which is capable to negatively affect the operational fitness of the component device, and if no issue is anticipated by the predictive model, operating the wind turbine as a type 2 wind turbine.

According to a third embodiment example of the present disclosure, there is established a wind turbine, which is configured to be operated according a method according to the first embodiment example of the present disclosure and/or according to the second embodiment example of the present disclosure.

In the context of the present disclosure, the term "component device" or "component" is understood to refer in particular to a sub-device of a wind turbine, which performs a particular technical function and/or which forms a structurally and/or mechanically contained unit within a wind turbine, and which is equipped with one or plural sensor devices which are used for measuring or determining a state or status of the component device and/or for providing input data to be used for controlling the very component device or another component device that is technically related to or co-operating with the very component device. Examples for a component device include any one component of the primary structural components, such as for example the tower, the nacelle, the hub, a blade, the rotor as a whole (including the hub and the blades), the pitching and yawing system, and any interfaces between the former; any sub-component of the electric power generator, such as for example the stator, the rotor, the bearing(s) coupling the rotor to the stator, a stator segment including the winding(s) where electric voltage or current is induced; a sub-component of a cooling system for cooling an electric component to be cooled including the stator or any stator segment of the stator, the electric converter, the electric voltage transformer, wherein sub-components of a cooling system include a primary cooling circuit, a heat exchanger device, a secondary cooling circuit, a cooling device including a passive cooling device and/or an active cooling device.

In the context of the present disclosure, the term "sensor device" or "sensor" is understood to refer in particular to a device, which is associated to a component device, and which is configured to measure, characterize and/or determine an operational parameter that represents or is indicative for an operational state, an operational condition, or an operational status of the component device. Examples for a sensor device include any temperature sensor which is arranged and/or configured to measure a temperature of a stator segment, a temperature of the electric converter, a temperature of the electric voltage transformer, a temperature of a coolant, a temperature of a heat exchanger device, a temperature of a primary or a secondary cooling circuit, a temperature of a cooling device, or a temperature of ambient air. Further examples for other types of a sensor device include any vibration sensor which is arranged and/or configured to measure a vibration of a mechanical component including the hub, a blade, the wind rotor as whole, the nacelle, the tower, a bearing, the rotor or the stator of the electric generator; any strain sensor which is arranged and/or configured to measure a strain of a mechanical component, examples of which are mentioned hereinbefore; any acceleration sensor, which is arranged and/or configured to measure an acceleration of a mechanical component, examples of which are mentioned hereinbefore; a voltage sensor which is arranged and/or configured to measure an electric voltage associated to an electric component of the wind turbine, such as for example the power generator, the electric converter or the voltage transformer; or a current sensor which is arranged and/or configured to measure an electric current associated to an electric component of the wind turbine, such as for example the power generator, the electric converter or the voltage transformer.

In the context of the present disclosure, the term "operational parameter" is understood to refer in particular to parameter, which is associated to a component device, and which represents or is indicative for an operational state, an operational condition, or an operational status of the component device. Examples for an operational parameter include any temperature of an electric component, such as for example a temperature of a stator segment, a temperature of a cooling circuit or of a coolant flowing in a cooling circuit, a temperature of a heat exchanger device, a temperature of a cooling device, a temperature of ambient air. Further examples for an operational parameter include the electric output power/current/voltage from a stator segment or the stator or from the electric generator as a whole, the electric output power/current/voltage from electric converter, the electric output power/current/voltage from the voltage transformer; a mechanical strain of a wind rotor blade; or a mechanical vibration generated at a bearing, such as for example the bearing coupling the rotor to the stator, the bearing of the rotating hub, the bearing coupling the nacelle to the tower.

In the context of the present disclosure, the term "sensor category" is understood to refer in particular to a sub-group of all sensor devices, which are associated to a component device, and which are arranged and/or configured to determine an operational parameter having a common degree or level of importance and/or relevance in characterizing the operational status, operational condition or operational state of the component device. Sub-group of sensor devices include at least priority 1 sensor devices and priority 2 sensor devices, and may further include priority 3 sensor devices. The grouping of sensor devices in sensor categories is generally effected according to a degree of relevance, directness and/or predictability, by which the respective corresponding operation parameter can be measured. The grouping of sensor device in sub-groups is individual for each ensemble of sensor devices that are associated to a component device. Example embodiments for such grouping of sensor device are explained further below. Generally, in such grouping of sensor devices, a sensor device is grouped as a priority 1 sensor device or in other words is attributed priority 1, if the sensor device is arranged and/or configured to measure an operational parameter that is critical for an operational fitness of the component device. A sensor device is grouped as a priority 2 sensor device or in other words is attributed priority 2, if the sensor device is configured to measure an operational parameter, which is critical for an operational fitness of the component device, and of which a value can be derived, e.g. by a physical model, from a value and/or a course in time of the value of an operational parameter measured by an associated priority 1 sensor device. And a sensor device is grouped as a priority 3 sensor device or in other words is attributed priority 3, if the sensor device is configured to measure an operational parameter, which is critical for an operational fitness of the component device, and of which a value can be derived, e.g. by a physical model, from a value and/or a course in time of the value of the operational parameter measured by an associated priority 2 sensor device and optionally further from a value and/or a course in time of the value of an operational parameter measured by an associated priority 1 sensor device.

In the context of the present disclosure, the term "operational fitness" or "operational health" may be understood to refer in particular to an operational status, an operational state, or an operational condition of a component device, which is considered to be characterized by a value of an associated operational parameter, such that a proper performing the technical function of the component device is ensured and will be ensured in the foreseeable future, wherein the foreseeable future may be measured by a particular forecast time period associated to the particular operational condition of the particular component device. As an example, an operational fitness of a stator winding segment may be characterized by its temperature as the associated operational parameter, and the operational fitness of a stator winding segment may be considered to be ensured if the temperature of the stator winding segment is within a predetermined range. The operational fitness may termed "good" if the associated operational parameter is within its predetermined range, or may termed "bad" if the associated operational parameter is outside of the predetermined range and at predetermined distance or difference to the range, or may be termed "intermediate" (i.e. between "good" and "bad") if the associated operational parameter is within the interval between the predetermined range and the predetermined allowable distance or difference to the range. For example, a stator segment may be said to be in a good condition, if its temperature is less than or equal to 90°C, and may be said to be in a bad condition, if its temperature is greater than or equal to 100°C.

Alternatively or in addition, in the context of the present disclosure, the term "operational fitness" or "operational health" may be understood to refer in particular to an operational status, an operational state, or an operational condition of a component device, which is measured or characterized by the operational usage time of the component device and is related to a rated lifetime or to predetermined maintenance intervals or service intervals of the component device, or an operational status, an operational state, or an operational condition of the sensor device, which measures or determines an operational parameter of an associated component device, and which has a usage time of the sensor device and is related to a rated lifetime or to predetermined maintenance intervals or service intervals of the sensor device. In this understanding of operational fitness, for example, an operational fitness may be considered to be ensured if no maintenance or service interval is planned within e.g. the forecast time period.

In the context of the present disclosure, the term "predictive model" may be understood to refer in particular to a model for a component device, which model produces as an output a status of and/or forecast for the operational fitness in the foreseeable future, wherein the foreseeable future may be measured by a particular forecast time period associated to the particular operational condition of the particular component device. A predictive model may take as an input a present value of an operational parameter and/or a time course of an operational parameter of the component device, which parameter has for example been measured by an associated sensor device. The status and/or forecast for the operational fitness of the component device may be expressed by stating whether an issue is foreseeable or envisaged, which negatively affects the operational fitness of the component device. For example, a predictive model may include a physical model of the component, wherein the model takes as input one or plural present values of one or plural operational parameters and/or a time course of one or plural present values of one or plural operational parameters, and produces as an output for example a time course of the value of one or plural operational parameters in the foreseeable future, including an associated statement whether and/or when the operational parameter indicates the occurrence of an issue. As another example for a predictive model, a predictive model may include one or plural model types from the group that contains ordinary least squares, generalized linear models (GLMs), logistic regression, random forecast, decision tree, neural network, multivariate adaptive regression splines (MARS), etc.

In the context of the present disclosure, the term "issue" may be understood to refer in particular to an event, which occurs in the foreseeable future, and which negatively affects the operational fitness of a component device. A negative affection of the operational fitness may be given, for example, if a forecast value of an operation parameter leaves the predetermined range that is associated with a "good" condition, or if a maintenance or service interval appears/falls within the foreseeable future.

In the context of the present disclosure, the term "geographical location" of a wind turbine may be understood to refer in particular to the location of a wind turbine as expressed by its proper geographical coordinates and/or to the location of the wind turbine as expressed by its location in relation to the location(s) of one or plural other wind turbines in a wind farm. For example, a wind farm may have/be characterized by an area of lateral geographical extension, including a corner of the area and an edge of the area. Further in this example, the location of a wind turbine may be expressed as being at or near a corner of the area, or as being on or near an edge of the area of extension of the wind farm. As another example, an area of extension of a wind farm may include a hilly terrain including depressions or dips, and ups or summits or tops. In this other example, the location of a wind turbine may be expressed as being on or near an up or summit or top (and thus exposed to influences of the weather), or as being in a depression or dip (and thus sheltered from influences of the weather).

In the context of the present disclosure, the term "type 1 wind turbine" may be understood to refer in particular to a wind turbine, in which during operation all the sensor devices are switched on continuously and in particular read out periodically or quasi-continuously. In other words, no method of controlling the sensors is being executed in a wind turbine of type 1, according to which method one or plural sensor devices may be switched off at least temporarily.

By contrast, in the context of the present disclosure, the term "type 2 wind turbine" may be understood to refer in particular to a wind turbine, in which during operation one or plural sensor devices are operated in a controlled manner, which includes an at least temporary switching off or ceasing of operation of the one or plural sensor devices, in particular an operation of the wind turbine according to the first and/or second embodiment example of the present disclosure set forth above and in the following.

In the context of the present disclosure, the term "weather data" and "weather forecast data" may be understood to refer in particular to meteorological data including, for example, the temperature of the ambient atmosphere, the humidity of the ambient atmosphere, the wind (direction and wind speed) present in the ambient atmosphere. Of these, in view of a safe operation of the wind turbine, the most relevant meteorological parameter is wind speed. A wind speed of more than or equal to 3,5 m/s (which is the so-called cut-in wind speed) to less than or equal to 14 m/s (which is the so-called rated output wind speed) is referred to as a low wind speed. A wind speed of more than 14 m/s (rated output wind speed) to less than or equal to 25 m/s (which is the so-called cut-out wind speed) is referred to as a nominal wind speed. A wind speed of more than 25 m/s (the so-called cut-out wind speed) is referred to as a high wind speed. A wind turbine is conventionally shut down at high wind speed, because there is an excessive risk of damage to some component devices of the wind turbine, for example the electric generator due to excessive power generation, or the wind rotor due to excessive mechanical strain imposed by the high wind speed. Accordingly, at high wind speed, a safe operation of a wind turbine is not considered allowable. A wind turbine is conventionally not operated at wind speeds below 3,5 m/s (the cut-in wind speed), because such below cut-in wind speeds are too slow for driving the ensemble of wind rotor, torque transmission axis, transmission gear and electric generator to rotate. Accordingly, at such low wind speed below the cut-in speed, an efficient operation of a wind turbine is not considered possible.

In an exemplary embodiment of the first embodiment example, the method further may have, during operation of the wind turbine, if an issue is anticipated by the predictive model, switching on any priority 2 sensor device.

In an exemplary embodiment of the first embodiment example, the method still further may have, during operation of the wind turbine:
obtaining weather data and/or weather forecast data at least for a forecast time period, and in particular doing so before running at least one predictive model for the component device, wherein the data are critical for allowing or not a safe operation of the wind turbine; and
only if the weather data and/or the weather forecast data are such that a safe operation of the wind turbine is allowable, and
if no issue is anticipated by the predictive model, switching off any priority 2 sensor device, while continuing to operate including for example to read out periodically any priority 1 sensor device.

In an exemplary embodiment of the first embodiment example, the method still further may have:
if the weather data and/or the weather forecast data are such that a safe operation is not allowable during the forecast time period, or
if an issue is anticipated by the predictive model during the forecast time period, switching on any priority 2 sensor device.

In an exemplary embodiment of the first embodiment example, the method further may have grouping a plurality of sensor devices associated to a component device of the wind turbine in sensor categories including priority 1, priority 2, and priority 3, and in particular doing so in preparation of, or for example during, operation of the wind turbine. Herein, priority 2 is attributed to a sensor device, which is configured to measure an operational parameter, which is critical for an operational fitness of the component device, and of which a value can be derived, for example by a physical model, from a value and/or a course in time of the value of an operational parameter measured by an associated priority 1 sensor device, and priority 3 is attributed to a sensor device, which is configured to measure an operational parameter, which is critical for an operational fitness of the component device, and of which a value can be derived, for example by a physical model, from a value and/or a course in time of the value of the operational parameter measured by an associated priority 2 sensor device and optionally further from a value and/or a course in time of the value of an operational parameter measured by an associated priority 1 sensor device. The method may further have, during operation of the wind turbine: if no issue is anticipated by the predictive model, further to switching off any priority 2 sensor device, switching off any priority 3 sensor device, while continuing to operate including for example to read out periodically any priority 1 sensor device.

In an exemplary embodiment of the first embodiment example, the method still further may have: for any priority 3 sensor device, which has been switched off, periodically, for example once per day, switching on said priority 3 sensor devices, performing a test whether said priority 3 sensor devices are capable to function properly, and switching off said priority 3 sensor devices.

In an exemplary embodiment of the first embodiment example, the method still further may have: for any priority 2 sensor device, which has been switched off, periodically, for example once per day, switching on said priority 2 sensor devices, performing a test whether said priority 2 sensor devices are capable to function properly, and switching off said priority 2 sensor devices.

In an exemplary embodiment of the first embodiment example, the method still further may have: if the weather data and/or the weather forecast data are such that a safe operation is not allowable during the forecast time period, or if an issue is anticipated by the predictive model during the forecast time period, switching on any priority 2 sensor device, and switching on any priority 3 sensor device.

In an exemplary embodiment of the first embodiment example, the step of running at least one predictive model for the component device of a wind turbine, in particular of a first wind farm, has obtaining data on an operational fitness of a corresponding component device of another wind turbine located in a same or in another wind farm, wherein the other wind turbine is of a same type, in particular is equipped with corresponding component devices, as said wind turbine. For example, in a wind farm having plural wind turbines of a same type, the corresponding component device of another wind turbine is likely to have a different degree of operational fitness as compared to the component device of said wind turbine. For example, the corresponding component device may have an issue caused by a cooling system of the other wind turbine, for example a heat exchanger device is clogged, so that a cooling efficiency is degraded and accordingly a temperature of the corresponding component device is elevated to an extent that it is above the predetermined temperature range that is associated with a good operational fitness and that operational fitness is degraded, and such that there is a risk of overheating of the other component device. This data relating to the operational fitness of the corresponding component device of the other wind turbine may be taken into account in the predictive model for the component device of said wind turbine in that an according issue is raised, so that accordingly, all the sensor devices associated to the component device are switched on, and for example are read out, for checking whether the component device of the said wind turbine also has a degraded operational fitness, in particular a corresponding issue, as in the other wind turbine. Only of it has been confirmed that the component device of the said wind turbine does not have a degraded operational fitness, in particular does not have a corresponding issue, as in the other wind turbine, the raised issue may be cancelled, and the normal control strategy may be resumed.

In an exemplary embodiment of the first embodiment example, the step of checking if the predictive model indicates an issue further has checking if the predictive model indicates an issue during a forecast time period.

In an exemplary embodiment of the first embodiment example, the step of checking if the predictive model indicates an issue further has checking if the component device has a remaining portion of a rated operational lifetime and/or has a maintenance or service interval prescribing maintenance or service work.

In an exemplary embodiment of the first embodiment example, the step of obtaining weather data and/or weather forecast data at least for the forecast time period may have: obtaining wind speed data at least for the forecast time period, and alternatively or in addition obtaining weather data and/or weather forecast data at least for the forecast time period relating to another wind turbine, wherein the other wind turbine is in the same wind farm as said turbine or is in a wind farm different from said wind farm but, in particular meteorologically, related to said wind farm.

In an exemplary embodiment of the first embodiment example, the sensor device is a sensor device that is selected from the group that consists of a temperature sensor, a strain sensor, a vibration sensor, an acceleration sensor, an electric power sensor, an electric current sensor, an electric voltage sensor, and an ambient wind speed sensor.

In an exemplary embodiment of the first embodiment example, the sensor device is a temperature sensor and the component device is one component device that is selected from the group that consists of a stator winding segment, a hydraulic unit for aligning a direction of a nacelle of the wind turbine, a bearing for a rotor of the wind turbine, an electric transformer of the wind turbine, a voltage converter of the wind turbine.

In an exemplary embodiment of the first embodiment example, the sensor device is a temperature sensor and the component device is a stator winding segment, wherein a stator of an electric generator of the wind turbine has a plurality of, for example at least six or more, stator winding segments, wherein each stator winding segment is provided with an associated temperature sensor for measuring a temperature of the stator winding segment, in particular a winding temperature, wherein a first plurality of stator winding segments is coupled to a common first coolant circuit in a serial arrangement and a second plurality of stator winding segments is coupled to a common second coolant circuit in a serial arrangement, wherein a coolant flow rate in the first coolant circuit is different from a coolant flow rate in the second coolant circuit. The associated temperature sensor are grouped in categories including priority 1, priority 2 and priority 3 according to the following criteria:
a temperature sensor is associated priority 1, if the sensor is associated to a stator winding segment, of which the temperature is crucial to be monitored continuously, in particular if the stator winding segment receives less coolant flow rate and/or has a higher temperature than other stator winding segments;
a temperature sensor is associated priority 2, if the sensor is associated to a stator winding segment, of which the temperature is nice to gather for monitoring purposes, but not crucial to be monitored continuously;
a temperature sensor is associated priority 3, if the sensor is associated to a stator winding segment, of which the temperature is expected to remain in a desired temperature range throughout operation, in particular if the stator winding segment receives a higher coolant flow rate and/or has a lower temperature than other stator winding segments.

In an exemplary embodiment of the first embodiment example, the component device may act as a heat source and is coupled to a heat exchanger device via a first, in particular primary cooling circuit, wherein the heat exchanger device is coupled to a cooling device, for example an active or passive cooling device via a second, in particular secondary cooling circuit, wherein the cooling device is configured to act as a heat sink, and wherein the heat exchanger device is configured to enable a heat transfer from the first cooling circuit to the second cooling circuit.

In an exemplary embodiment of the first embodiment example, the categories of the sensor devices are attributed as follows:
a priority 1 sensor device is thermally coupled to the component device or to a portion of the first cooling circuit located downstream of a coolant outlet of the first cooling circuit from the component device;
a priority 2 sensor device is thermally coupled to a portion of the second cooling circuit located downstream of a cooling circle outlet of the second cooling circuit from the heat exchanger device or to a portion of the cooling device;
a priority 3 sensor device is thermally coupled to a portion of the first cooling circuit located upstream of a coolant inlet of the first cooling circuit into the component device.

In an exemplary embodiment of the second embodiment example, the method may have: if an issue is anticipated by the predictive model, operating the wind turbine as a type 1 wind turbine.

In an exemplary embodiment of the second embodiment example, the method may still further have for each wind turbine, which is operable as a type 2 wind turbine and which is currently operating as a type 1 wind turbine: running at least one predictive model for the component device, which is decisive for the operational fitness of the wind turbine, and check if the predictive model indicates an issue, which is capable to negatively affect the operational fitness of the component device, and if no issue is anticipated by the predictive model, switching over the wind turbine to be operated as a type 2 wind turbine.

In an exemplary embodiment of the second embodiment example, the method may have: obtaining weather data and/or weather forecast data at least for a forecast time period, and in particular doing so before running at least one predictive model for the component device, wherein the data are critical for allowing or not a safe operation of the wind turbine; and if the weather data and/or the weather forecast data are such that a safe operation of the wind turbine is not allowable during the forecast time period, switching over the wind turbine to be operated as a type 1 wind turbine.

In an exemplary embodiment of the second embodiment example, the method may have: only if the weather data and/or the weather forecast data are such that a safe operation of the wind turbine is allowable during the forecast time period, and if no issue is anticipated by the predictive model during the forecast time period, switching over the wind turbine to be operated as a type 2 wind turbine.

### Brief description of the drawings

In the following, exemplary embodiment examples of the present disclosure are described in detail with reference to the following drawings.
**Fig. 1** shows a flow diagram of a method of operating a wind turbine according to the first embodiment example of the present invention.
**Fig. 2** shows a flow diagram of a method of operating a wind turbine in a wind farm, according to the second embodiment example of the present invention.
**Fig. 3** shows a schematic view of a wind farm having a plurality of wind turbines, wherein each wind turbine is configured to be operated according to a method according to the first and/or according to the second embodiment example of the present invention.
**Fig. 4** shows a schematic illustration of a system in a wind turbine according to the third embodiment example of the present invention, wherein the system comprises a component device, a heat exchanger device that is coupled to the component device via a first cooling circuit, a cooling device that is coupled to the heat exchanger device device via a second cooling circuit, and a plurality of temperature sensor devices.
**Fig. 5** shows a schematic illustration of a stator unit as a component device of a wind turbine according to the third embodiment example of the present invention, wherein the stator unit has a plurality of stator winding segments, each of which is equipped with a temperature sensor device.
**Fig. 6** is a schematic diagram depicting a wind turbine power output as a function of wind speed.

Similar or like components in different figures are provided with the same reference numerals. The figures are not necessarily drawn to scale, and may be schematic.

### Detailed description of embodiments

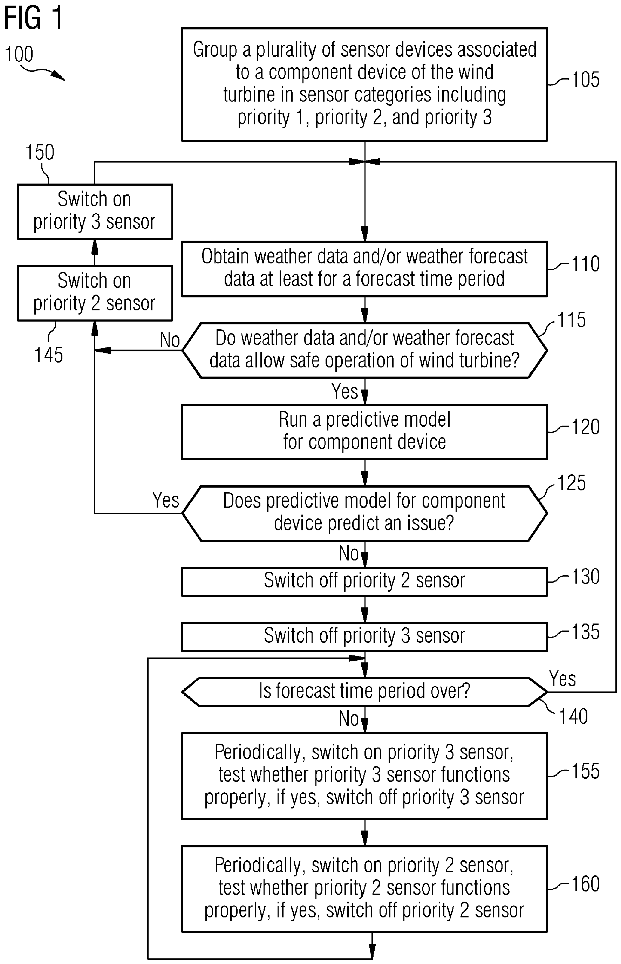

**Fig. 1** shows a flow diagram of a method 100 of operating a wind turbine 20 according to the first embodiment example of the present invention.

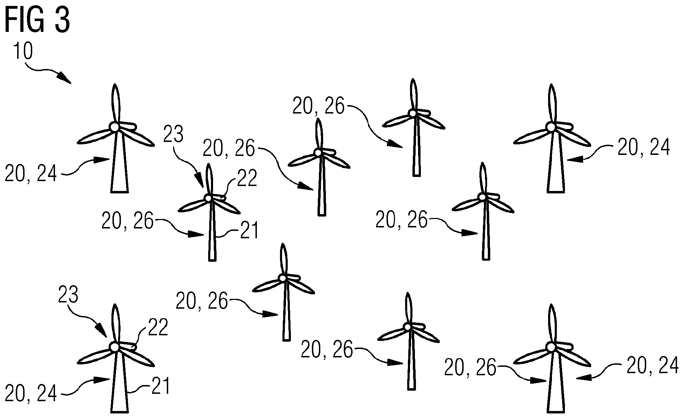

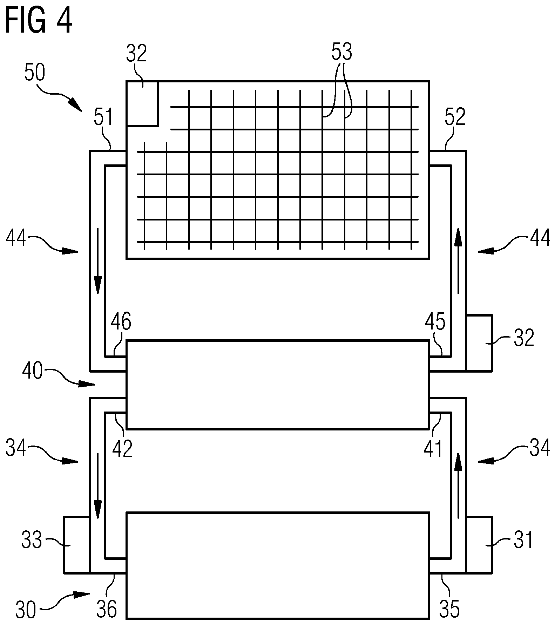

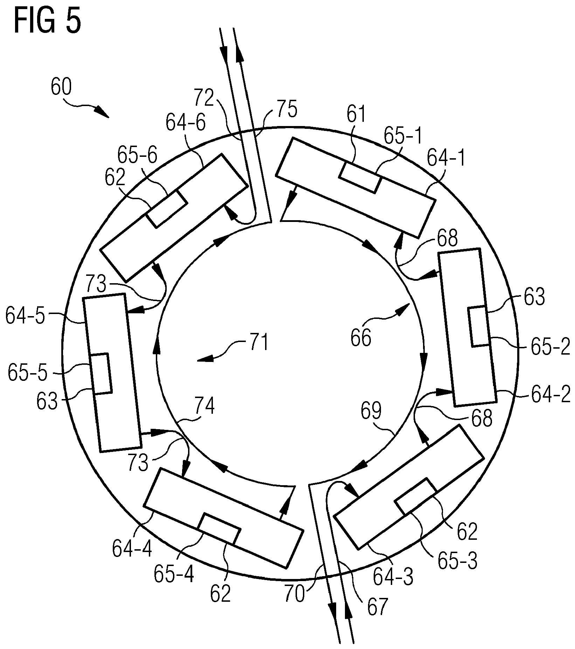

As a context for performing the method 100, a wind turbine 20 is taken to have at least one component device (see for example 30 in Fig. 4 and 64-1 to 64-6 in Fig. 5), of which an operational fitness is monitored by a plurality of sensor devices (see 31 to 33 in Fig. 3 and 65-1 to 65-6 in Fig. 5) associated to the component device. Each sensor device is configured to measure an operational parameter of the component device. The operational parameter is considered to be indicative of the operational fitness of the component device.

In a generalized embodiment, method 100 has, as indicated at 105 in Fig. 1, a step of grouping a plurality of sensor devices (see 31 to 33 in Fig. 4; 61 to 63 in Fig. 5) associated to a component device (see 30 in Fig. 4; 64-1 to 64-6 in Fig. 5) of a wind turbine (see 20 in Fig. 3) in sensor categories, wherein the sensor categories include priority 1 and priority 2. This step 105 may in particular be carried out in preparation of an operation of a wind turbine 20. In other embodiments, this step 105 may be performed during an operation of a wind turbine 20.

Generally, priority 1 is attributed to a sensor device (see 31 in Fig. 4, 61 in Fig. 5), which, in association to a particular component device of the wind turbine, is configured to measure an operational parameter that is critical for a determination whether an operational fitness of the component device (see 30 in Fig. 4, 64-1 to 64-6 in Fig. 5) is given or not. Also, the component device is considered to be critical for a determination, whether an operational fitness of the wind turbine 20 is given or not. In contrast, priority 2 may be attributed to a sensor device (see 32 in Fig. 4, 62 in Fig. 5), which is considered to be of a lower relevance, or a more indirect relevance for the operational fitness of the component device than a priority 1 sensor device, or may be attributed to a sensor device, the measured value of which can be derived, e.g. by using a physical model, from the measured value of a priority 1 sensor device.

Further in the generalized embodiment, during operation of the wind turbine 20, the method 100 has, as indicated at 120 in Fig. 1, a step 120 of running at least one predictive model for the component device (see 30 in Fig. 4; 64-1 to 64-6 in Fig. 5). This step 120 is followed, as indicated at 125 in Fig. 1, by a step of checking whether the predictive model indicates an issue, which is capable to negatively affect the operational fitness of the component device. If, as indicated at 125, exit No, no issue is anticipated by the predictive model, any priority 2 sensor device is switched off, as indicated at box 130, while any priority 1 sensor device is continued to operate and be read out.

Further in the generalized embodiment, if, as indicated at 125, exit Yes, an issue is anticipated by the predictive model, any the priority 2 sensor device may be switched on, as indicated at box 145.

Furthermore in the generalized embodiment, also during operation of the wind turbine 20, the method may have a step 110 of obtaining weather data and/or weather forecast data at least for a forecast time period. This step 110 may be carried out in particular before running at least one predictive model for the component device. The obtained data obtained in step 110 are considered to be critical for a determination, indicated at 115 in Fig. 1, whether a safe operation of the wind turbine 20 is allowable or not, and are used as follows.

Furthermore in the generalized embodiment, only if, as indicated at 115, exit Yes, the weather data and/or the weather forecast data are such that a safe operation of the wind turbine is allowable, and if, as indicated at 125, exit No, no issue is anticipated by the predictive model, any priority 2 sensor device is switched off at 130 in Fig. 1, while any priority 1 sensor device is continued to operate and in particular read out.

Still further in the generalized embodiment, if by contrast, as indicated at 115, exit No, the weather data and/or the weather forecast data are such that a safe operation of the wind turbine is not allowable during the forecast time period, or if, as indicated at 125, exit Yes, an issue is anticipated by the predictive model during the forecast time period, any priority 2 sensor device is switched on 145.

In a refined embodiment of the method 100 of operating the wind turbine, as shown in Fig. 1, the method has a step 105 of grouping a plurality of sensor devices (31 to 33 in Fig. 4, 65-1 to 65-6 in Fig. 5) in sensor categories including priority 1, priority 2, and priority 3. Herein, the plurality of sensor devices is associated to a component device (see 30 in Fig. 4, 64-1 to 64-6 in Fig. 5) of the wind turbine 20. This step may be carried out in particular in preparation of operation of the wind turbine. Alternatively, this step may be carried out during operation of the wind turbine.

As mentioned above, priority 1 is attributed to a sensor device (see 31 in Fig. 4, 61 in Fig. 5), which, in association to a particular component device of the wind turbine, is configured to measure an operational parameter that is critical for a determination as to whether an operational fitness of the component device (see 30 in Fig. 4, 64-1 to 64-6 in Fig. 5) is given or not.

Priority 2 is attributed to a sensor device (see 32 in Fig. 4; 62 in Fig. 5), which is configured to measure an operational parameter, which is considered to be critical for determining whether an operational fitness of the component device (see 30 in Fig. 4; 64-1 to 64-6 in Fig. 5) is given or not. Alternatively or in addition, priority 2 is attributed to a sensor device, of which a value can be derived, e.g. by a physical model, from a value and/or a course in time of the value of an operational parameter measured by an associated priority 1 sensor device.

Priority 3 is attributed to a sensor device (see 33 in Fig. 4 63 in Fig. 5), which is configured to measure an operational parameter, which is critical for determining whether an operational fitness of the component device (see 30 in Fig. 4; 64-1 to 64-6 in Fig. 5) is given or not. Alternatively or in addition, priority 3 is attributed to a sensor device, of which a value can be derived, e.g. by a physical model, from a value and/or a course in time of the value of the operational parameter measured by an associated priority 2 sensor device, and optionally further from a value and/or a course in time of the value of an operational parameter measured by an associated priority 1 sensor device.

Further in the refined embodiment of the method 100 of operating the wind turbine, as shown in Fig. 1, during operation of the wind turbine, the method has a step 125 of determining, whether an issue is anticipated by the predictive model or not. If, at 125, exit No, no issue is anticipated by the predictive model, any priority 2 sensor device (see 32 in Fig. 4, 62 in Fig. 5) is switched off, at 130 in Fig. 1. Then, any priority 3 sensor device (see 33 in Fig. 4, 63 in Fig. 5) is switched off, at 135 in Fig. 1, while any the priority 1 sensor device (see 31 in Fig. 4, 61 in Fig. 5) is continued to operate and read out.

Further in the method 100 shown in Fig. 1, the method may have, for any priority 3 sensor device, which has been switched off, a step 155 of periodically, in particular once per day, switching on said priority 3 sensor devices (see 33 in Fig. 4, 63 in Fig. 5), performing a test whether said priority 3 sensor devices are capable to function properly, and switching off said priority 3 sensor devices. Further, the method may have, for any priority 2 sensor device (see 32 in Fig. 4, 62 in Fig. 5), which has been switched off, a step 160 of periodically, in particular once per day, switching on said priority 2 sensor devices, performing a test whether said priority 2 sensor devices are capable to function properly, and switching off said priority 2 sensor devices.

By contrast, in the refined method 100 shown in Fig. 1, if, at 125, exit No, the weather data and/or the weather forecast data are such that a safe operation of the wind turbine 20 is not allowable during the forecast time period, or if, at 125, exit Yes, an issue is anticipated by the predictive model during the forecast time period, any priority 2 sensor device is switched on, as indicated at 145, and any priority 3 sensor device is switched on, as indicated at 150 in Fig. 1.

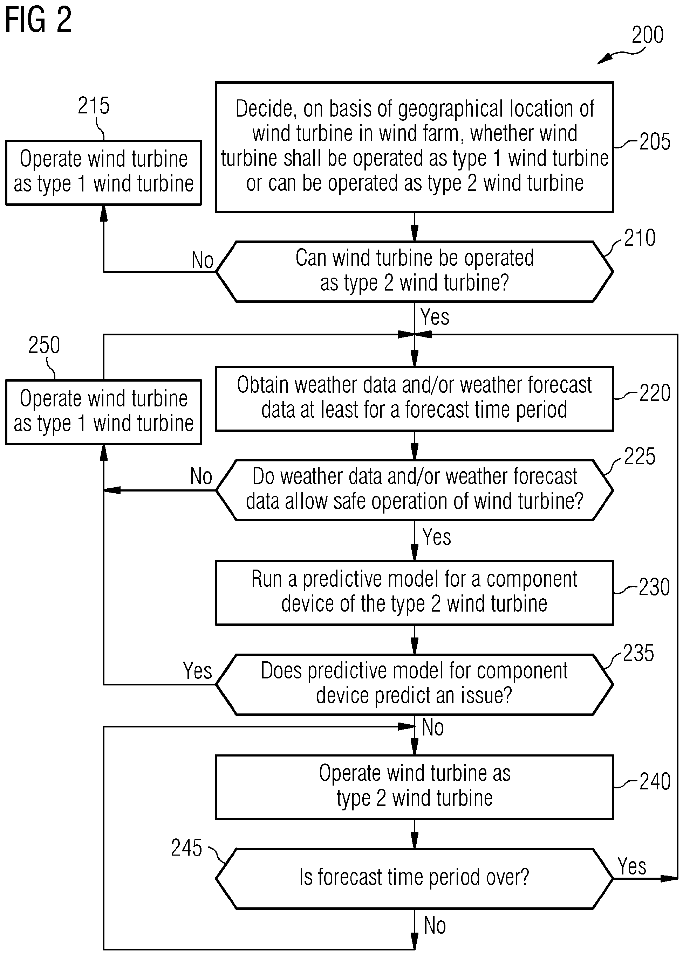

**Fig. 2** shows a flow diagram of a method 200 of operating a wind turbine 20 in a wind farm 10, according to the second embodiment example of the present invention.

As a context for performing the method 200, the wind turbine 20 has at least one component device (see 30 in Fig. 4, 64-1 to 64-6 in Fig. 5), of which an operational fitness is monitored by a plurality of sensor devices associated to the component device. Each sensor device is configured to measure an operational parameter of the component device. The operational parameter is indicative of the operational fitness of the component device.

Further as a context for performing the method 200, the wind farm 10 has a plurality of wind turbines 20. The wind farm 10 is configured to be operated such that a first portion of the plurality of wind turbines 20 is each configured to operate as a type 1 wind turbine 24, and a second portion of the plurality of wind turbines 20 is each configured to be operable as a type 2 wind turbine 26. Being operated as a type 1 wind turbine 24 means that all sensor devices are switched on continuously including in particular read out periodically. Being operable as a type 2 wind turbine 26 means that at least one of the sensor devices is operable in a controlled manner in the wind turbine 20, wherein the wind turbine is operated according to the method 100 according to the first embodiment example of the present invention, which has for example been described above with reference to Fig. 1.

The method 200 has, for each wind turbine 20, the step 205 of deciding on the basis of a geographical location of the wind turbine 20 in the wind farm 10, whether the wind turbine 20 shall be operated as a type 1 wind turbine 24 or can be operated as a type 2 wind turbine 26.

The method 200 further has, for each wind turbine 20, which is operable as a type 2 wind turbine 26, as indicated at 210, exit Yes, a step 230 of running at least one predictive model for a component device (see 30 in Fig. 4, 64-1 to 64-6 in Fig. 5), which is decisive for an operational fitness of the wind turbine 20. The method 200 continues with a step 235 of checking whether the predictive model indicates an issue, which is capable to negatively affect the operational fitness of the component device. If, as illustrated at 235, exit No, no issue is anticipated by the predictive model, the wind turbine 20 is operated as a type 2 wind turbine 26, as illustrated at box 250 in Fig. 2. By contrast, in the method 200, if, as illustrated at 235, exit Yes, an issue is anticipated by the predictive model, the wind turbine 20 is operated as a type 1 wind turbine 24, as illustrated at 250 in Fig. 2.

The method 200 further has, for each wind turbine 20, which is, as illustrated at 210, exit Yes, operable as a type 2 wind turbine 26 and is currently operating as a type 1 wind turbine, as illustrated at 250, a step 230 of running at least one predictive model for the component device (see 30 in Fig. 4, 64-1 to 64-6 in Fig. 5), which is decisive for the operational fitness of the wind turbine 20. This is followed by a step 235 of and checking whether the predictive model indicates an issue, which is capable to negatively affect the operational fitness of the component device. If, as indicated at 235,exit No, no issue is anticipated by the predictive model, the wind turbine 20 is switched over to be operated as a type 2 wind turbine 26, as illustrated at 240 in Fig. 2.

As illustrated in Fig. 2, the method 200 further has a step 220 of obtaining weather data and/or weather forecast data at least for a forecast time period. This step 220 may be carried out in particular before the running, illustrated at 230 in Fig. 2, the at least one predictive model for the component device. The obtained data are considered to be critical for a determination, illustrated at 225 in Fig. 2, whether a safe operation of the wind turbine 20 is allowable or not, and are used as follows

If, as illustrated at 225, exit No, the weather data and/or the weather forecast data are such that a safe operation of the wind turbine is not allowable during the forecast time period, the wind turbine 20 is switched over to be operated as a type 1 wind turbine 24, as indicated at 250 in Fig. 2.

By contrast, only if, as illustrated at 225, exit Yes, the weather data and/or the weather forecast data are such that a safe operation of the wind turbine 20 is allowable during the forecast time period, and if, as illustrated at 235, exit No, no issue is anticipated by the predictive model during the forecast time period, the wind turbine 20 is switched over to be operated as a type 2 wind turbine 26, as illustrated at 240 in Fig. 2.

**Fig. 3** shows a schematic view of a wind farm 10 having a plurality of wind turbines 20, wherein each wind turbine 20 is configured to be operated according to a method 100 according to the first and/or a method 200 according to the second embodiment example of the present invention.

The wind farm 10 has a plurality of wind turbines 20 and is configured to be operated such that a first portion of the plurality of wind turbines 20 is configured to operate as a type 1 wind turbine 24, and a second portion of the plurality of wind turbines 20 is configured to operate as a type 2 wind turbine 26. Being operated as a type 1 wind turbine 24 means that all sensor devices are switched on continuously and in particular read out periodically, and/or in other words, no method of controlling the sensor devices in terms of switching the sensors off and on is carried out in that wind turbine 24. Being operated as a type 2 wind turbine 26 means that at least one of the sensor devices of the wind turbine is operated in a controlled manner in the wind turbine, that is the wind turbine 20 is operated according the methods 100, 200 of operating a wind turbine 20 disclosed herein, and in particular the methods 100, 200 of operating a wind turbine 20 set forth hereinbefore with reference to the Figures 1 and 2.

For each wind turbine 20 of the wind farm 10, a decision is taken, as shown at 205 in Fig. 2, on the basis of a geographical location of the wind turbine 20 in the wind farm 10, whether the wind turbine 20 shall be operated as a type 1 wind turbine 24 or can be operable as a type 2 wind turbine 26. If as a result of this decision, a wind turbine 20 shall be operated as a type 1 wind turbine 24, that wind turbine 24 shall continuously be operated as a type 1 wind turbine 24. The decision taken on the basis of the geographical location may consider for example whether a wind turbine is located with a greater than average exposure to the weather. In particular, it may be considered whether the wind turbine is located for example at or near a corner of the area of extension of the wind farm 10; this is the case for the four wind turbines, which are located at the four corners of the area of extension of the wind farm 10, and which are indicated in Fig. 3 by a thicker tower and referenced with the reference numeral 24. It may also be considered whether the wind turbine is located for example on or near an edge of the area of extension of the wind farm 10, or the wind turbine is located for example on or near a top of a hill within the area of extension of the wind farm 10, but these decision criteria have not been applied in the embodiment of the wind farm 10 shown in Fig. 3.

For those wind turbines 26, which are located somewhat more sheltered or less exposed, a decision is taken, as shown at 205 in Fig. 2, that these wind turbines 20 can be operated as type 2 wind turbines 26. In the example of Fig. 3, a somewhat more sheltered or less exposed location is attributed to all those wind turbines, which are located within the area of extension of the wind farm 10, and all those wind turbines, which are located on or near one of the edges of the area of extension of the wind farm 10; these wind turbines are indicated in Fig. 3 by a narrower tower and referenced with the reference numeral 26.

For those wind turbines 26, which have been decided to be suitable for being operated as a type 2 wind turbine, at least one predictive model is run, as shown at 230 in Fig. 2, for one or plural a component devices, which is decisive for an operational fitness of the wind turbine 20, and it is checked, as shown at 235 in Fig. 2, if the predictive model indicates an issue, which is capable to negatively affect the operational fitness of the component device. If no issue is anticipated by the predictive model, for example within a model forecast time period, the wind turbine 20 is operated as a type 2 wind turbine 26; this means that a method 100 for operating the wind turbine according to the first embodiment example of the present invention, and in particular as described with reference to Fig. 1 is carried out, which means that one or plural sensor devices are switched off at least temporarily for saving cost of operation these sensor devices. On the other hand, if an issue is anticipated by the predictive model, the wind turbine is operated temporarily as a type 1 wind turbine, until the issue has been resolved.

**Fig. 4** shows a schematic illustration of a system in a wind turbine according to the third embodiment example of the present invention, wherein the system comprises a component device 30, a heat exchanger device 40 that is coupled to the component device 30 via a first cooling circuit 34, a cooling device 50 that is coupled to the heat exchanger device device 40 via a second cooling circuit 44, and a plurality of temperature sensor devices 31, 32, 33.

In the system illustrated in Fig. 4, the component device 30 acts as a heat source and is coupled to a heat exchanger device 49 via a first, in particular primary cooling circuit 34. The component device 30 may be, for example, a stator unit 60 as illustrated in Fig. 5 and as described below, or an electric converter device, or an electric voltage transformer device, in any case a device, in which is generated and which needs to be cooled in order to keep a temperature of the device in a predetermined range of temperatures, which enable an enduring operation of the component device 30 with good operational fitness. For facilitating the cooling of the component device 30, the heat generated during operation in the component device 30 needs to be dissipated. To achieve heat dissipation, the component device 30 is coupled to a heat exchanger device 49 via a first, in particular primary cooling circuit 34, which transports heat energy away from the component device 30. The heat exchanger device 40 is configured to enable a heat transfer from the first/primary cooling circuit 36 to the second/secondary cooling circuit 44. Furthermore, the heat exchanger device 40 is coupled to a cooling device 50, via a second, in particular secondary cooling circuit 44, which transports heat energy away from the heat exchanger device 40 to the cooling device 50. The cooling device 50 may be an active or a passive cooling device; in any case, the cooling device 50 is configured to act as a heat sink. In the example system of Fig. 4, the cooling device 50 is a passive cooling device, which is configured to dissipate heat to the ambient air. To this end, the cooling device 50 has a plurality of cooling rips 53, which increase the heat exchanging surface to the ambient air for facilitating the heat transfer to the ambient air.

In order to enable an enduring operation of the component device 30, the temperature of the component device 30 is measured and monitored by a plurality of temperature sensor devices 31, 32, 33. This plurality of temperature sensor devices 31, 32, 33 has been grouped, as illustrated at 105 in Fig. 1, in sensor categories, which include at least one a priority 1 sensor device 31, at least one a priority 2 sensor device 32, and at least one a priority 3 sensor device 33.

This grouping is generally effected according to a degree of relevance, directness and/or predictability, by which the respective operation parameter, which is the temperature of the component device 30 in Fig. 4, can be measured.

Generally, priority 1 may be attributed to a sensor device 31, which is configured to measure, in particular directly, an operational parameter, here the temperature, which is critical for an operational fitness of the component device 30. To this end, in the example of the system shown in Fig. 4, a priority 1 sensor device 31 may be thermally coupled, in particular coupled directly, to the component device 30, or may, as illustrated in Fig. 4, be coupled to a portion of the first cooling circuit 36 located downstream of a coolant outlet 35 of the first cooling circuit 36 from the component device 30.

Generally further, priority 2 may attributed to a sensor device 32, which is configured to measure an operational parameter, which is critical for an operational fitness of the component device 30, and of which a value can be derived, e.g. by a physical model, from a value and/or a course in time of the value of an operational parameter measured by an associated priority 1 sensor device 31. To this end, in the example of the system shown in Fig. 4, a priority 2 sensor device 32 may, as illustrated in Fig. 4, be thermally coupled to a portion of the second cooling circuit 44 located downstream of a coolant outlet 45 of the second cooling circuit 44 from the heat exchanger device 40, or may be coupled to a portion of the cooling device 50.

Generally further, priority 3 may be attributed to a sensor device 33, which is configured to measure an operational parameter, which is critical for an operational fitness of the component device, and of which a value can be derived, e.g. by a physical model, from a value and/or a course in time of the value of the operational parameter measured by an associated priority 2 sensor device 32, and optionally further from a value and/or a course in time of the value of an operational parameter measured by an associated priority 1 sensor device 31. To this end, in the example of the system shown in Fig. 4, a priority 3 sensor device 33 may, as illustrated in Fig. 4, be thermally coupled to a portion of the first cooling circuit 34 located upstream of a coolant inlet 36 of the first cooling circuit 34 into the component device 30.

**Fig. 5** shows a schematic illustration of a stator unit 60 as a component device 30 of a wind turbine 10 according to the third embodiment example of the present invention, wherein the stator unit 60 has a plurality of stator winding segments 64-1 to 64-6, each of which is equipped with a temperature sensor device 65-1 to 65-6.

In the example system shown in Fig. 5, the stator unit 60 forms, together with a rotor (not shown), the essential parts of an electric generator of the wind turbine 20. The stator unit 60 has a plurality of, in the example of Fig. 5 six, stator winding segments 64-1 to 64-6. The component devices to be monitored for operational fitness are a plurality of stator winding segments 64-1 to 64-6. Each one of the stator winding segments 64-1 to 64-6 has an associated sensor device 65-1 to 65-6, which are, respectively, temperature sensors 65-1 to 65-6 for measuring a temperature, for example a winding temperature, of the stator winding segment 64-1 to 64-6. In order to ensure an enduring operability of the stator unit 60 and allow to attribute a "good" operational fitness, the temperature of each one of the stator winding segments 64-1 to 64-6 are required to be in a predetermined range, which may for example be less than or equal to 90°C. If the temperature of one of the stator winding segments 64-1 to 64-6 raised above a predetermined threshold of, for example, 100°C, the operational fitness that segment would be attributed a "bad" operational fitness, and an issue would be raised.

Each one of the stator winding segments 64-1 to 64-6 acts as a heat source, because a strong electric current is induced in the winding of each segment 64-1 to 64-6. The heat, which is generated during operation of the stator winding segments 64-1 to 64-6, must be dissipated. To this end, a first plurality of stator winding segments, in the example of Fig. 5 the segments referenced 64-1, 64-2, and 64-3, is coupled to a same or common first coolant circuit 66 in a serial arrangement. A second plurality of stator winding segments, in the example of Fig. 5 the segments referenced 64-4, 64-5, and 64-6, is coupled to a same second coolant circuit 71 in a serial arrangement. A first coolant flows through the first cooling circuit 66, and second coolant flows through the second cooling circuit 71.

In the example system shown in Fig. 5, a coolant flow rate in the first coolant circuit 66 may be different from, for example lower than, a coolant flow rate in the second coolant circuit 71. Accordingly, assuming substantially same voltage induction and resulting current flow in all of the stator winding segments, the temperatures as the operational parameters of the stator winding segments 64-1 to 64-3 coupled to the first coolant circuit 66 may be higher than the temperatures as the operational parameters of the stator winding segments 64-4 to 64-6 coupled to the second coolant circuit 71. Accordingly, a degree of relevancy of the temperatures of the stator winding segments 64-1 to 64-3 coupled to the first coolant circuit 66 is higher than a degree of relevancy of the temperatures of the stator winding segments 64-4 to 64-6 coupled to the second coolant circuit 71. Also, due to the sequential arrangement of the stator winding segments 64-1 to 64-3 coupled to the first coolant circuit 66 and the sequential arrangement of the stator winding segments 64-4 to 64-6 coupled to the second coolant circuit 71, a cooling of the individual winding segments may not be uniformly distributed, but may be different from each other. Depending on the particular cooling rate of a stator winding segment, the latter will dissipate somewhat more or less heat from that stator winding segment. As a consequence, a stator winding segment having a somewhat higher cooling rate will have a somewhat lower temperature, and *vice versa,* a stator winding segment having a somewhat lower cooling rate will have a somewhat higher temperature.

In the system example shown in Fig. 5, the temperature sensor devices 65-1 to 65-6 of the stator unit 60 are grouped in categories including priority 1, priority 2 and priority 3 according to the following criteria.

Whether identified in result from a temperature measurement test or as a result of a predictive model, that stator winding segment (in Fig. 5: the one referenced 64-1), which has the highest temperature of all segments, is attributed priority 1. That stator winding segment (in Fig. 5: the ones referenced 64-2 and 64-5), which have the lowest temperature, are attributed priority 3. Finally, those stator winding segments (in Fig. 5: the ones referenced 64-3, 64-4, and 64-6), which have a temperature in between the highest and the lowest temperature, are attributed priority 2.

According to these criteria, but in other words, a temperature sensor 65-1, 61 is associated priority 1, if the sensor 61 is associated to a stator winding segment 64-1, of which the temperature is crucial to be monitored continuously, in particular if the stator winding segment 64-1 receives less coolant flow rate than other stator winding segments 64-2 to 64-6. A temperature sensor 65-3, 65-4, 64-6, 62 is associated priority 2, if the sensor 62 is associated to a stator winding segment 64-3, 64-4, 64-6 of which the temperature is nice to gather for monitoring purpose, but not crucial to be monitored continuously. And a temperature sensor 65-5, 63 is associated priority 3, if the sensor 63 is associated to a stator winding segment 64-5, of which the temperature is expected to remain in a desired temperature range throughout operation, in particular if the stator winding segment 64-5 receives a higher coolant flow rate than other stator winding segments 64-1, ... 64-4, 64-6.

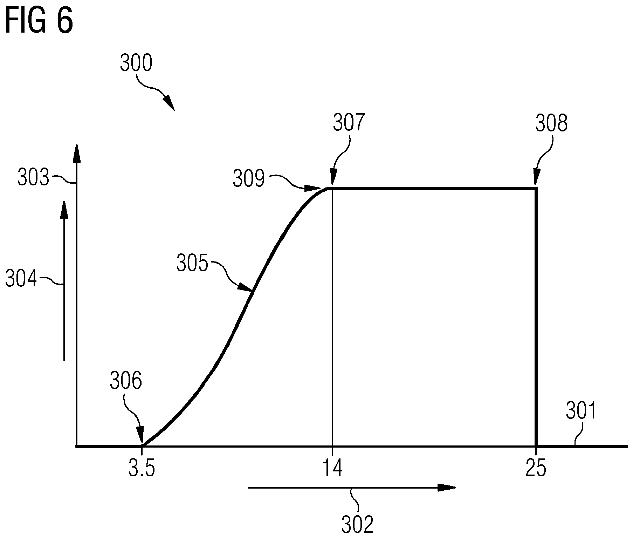

Fig. 6 is a schematic diagram 600 depicting a power output 304 of a wind turbine 20 as a function of wind speed 302. The diagram 600 has an abscissa 301, along which the wind speed 302 varies and is measured in units of m/s (meters per second), and an ordinate 303, along which the output power 304 of the wind turbine varies and is measured in units of kilowatts. The relationship between the wind speed 302 and the output power 304 is represented by the power curve 305.

As stated above, wind speed 302 is the most relevant one of meteorological parameters in view of a possible safe operation of a wind turbine.

A wind speed of more than or equal to 3.5 m/s (which is the so-called cut-in wind speed 306) to less than or equal to 14 m/s (which is the so-called rated output wind speed 307) is referred to as a low wind speed. A wind speed of more than 14 m/s (the rated output wind speed 307) to less than or equal to 25 m/s (which is the so-called cut-out wind speed 308) is referred to a nominal wind speed. A wind speed of more than 25 m/s (the so-called cut-out wind speed 308) is referred to a high wind speed. A wind turbine 20 is conventionally shut down at high wind speed, because there is an excessive risk of damage to some component devices of the wind turbine 20, for example the electric generator due to excessive power generation, or the wind rotor 23 due to excessive mechanical strain imposed by the high wind speed. Accordingly, at high wind speed (above the cut-out wind speed 308 of 25 m/s), a safe operation of a wind turbine is not considered allowable. A wind turbine is conventionally not operated at wind speeds below 3,5 m/s (the cut-in wind speed 306), because such below cut-in wind speeds are too slow for driving the ensemble of wind rotor, torque transmission axis, transmission gear and electric generator to rotate. Accordingly, at such low wind speed below the cut-in speed, an efficient operation of a wind turbine is not considered possible. For wind speeds between the cut-in wind speed 306 (3.5 m/s) and the rated output wind speed 307 (14 m/s), the output power 304 increases with increasing wind speed 302. For wind speeds above the rated output wind speed 307 (14 m/s) and up to the cut-out wind speed 308 (25 m/s), the output power 304 is substantially constant at a level referred to as the rated output power 309, i.e. independent from wind speed.

In exemplary embodiment examples of the method 100 of operating a wind turbine 20, in particular of operating a wind turbine as a type 2 wind turbine, the method 100 includes a step 110 (see Fig. 1) of obtaining weather data and/or weather forecast data at least for a forecast time period. This step 110 is in particular effected before the step 120 of running at least one predictive model for a component device (see 30 in Fig. 4, or 64-1 to 64-6 in Fig. 5), wherein the weather and/or weather forecast data are critical for allowing or not a safe operation of the wind turbine 20. The weather and/or weather forecast data are then taken into account in the step 115 of the method 100, according to which only if (see 115 in Fig. 1, exit Yes) the weather data and/or the weather forecast data are such that a safe operation of the wind turbine 20 is allowable, and if (see 125 in Fig. 1, exit No) no issue is anticipated by the predictive model, the priority 2 sensor devices (see 32 in Fig. 4, or 62 in Fig. 5) are switched off (see 130 in Fig. 1), while continuing to operate and read out periodically any priority 1 sensor device (see 31 in Fig. 4, or 61 in Fig. 5).

The weather and/or weather forecast data are further taken into account in the step 115 of the method 100 in that if (see 115 in Fig. 1, exit No) the weather data and/or the weather forecast data are such that a safe operation of the wind turbine 20 is not allowable during the forecast time period, or if (see 125 in Fig. 1, exit Yes) an issue is anticipated by the predictive model during the forecast time period, the priority 2 sensor device (see 32 in Fig. 4, or 62 in Fig. 5) is switched on (see 145 in Fig. 1), and then the priority 3 sensor device (see 33 in Fig. 4, or 63 in Fig. 5) is switched on (see 150 in Fig. 1).

The step 110 of obtaining weather data and/or weather forecast data at least for the forecast time period may include obtaining wind speed data at least for the forecast time period. Alternative or in addition, the step 110 may include obtaining weather data and/or weather forecast data at least for the forecast time period relating to another wind turbine, wherein the other wind turbine is in the same wind farm 10 as said turbine 20.

In a still alternative implementation of the method 100, the step 110 of obtaining weather data and/or weather forecast data at least for the forecast time period may include obtaining weather data and/or weather forecast data at least for the forecast time period relating to another wind turbine, which is in a wind farm different from said wind farm 10, but in particular meteorologically related to said wind farm 10. Herein, the term "meteorologically related to" may be understood to refer to a geographical and/or meteorological relation between a first site, where a first wind farm is located, and a second site, where a second wind farm is located, such that a particular meteorological condition or event occurring at the first site is likely to result a related meteorological condition or event occurring at the second site, in particular shifted to later in time. For example, if a major weather event such as a typhoon or hurricane occurs at a first site, and an overall wind direction is along or almost along a direction from the first site to the second site, a similar such major weather event may also occur, shifted to later in time, at a second site.

In this specification, example embodiments have been presented in terms of a selected set of details. However, a person of ordinary skill in the art would understand that many other example embodiments may be practiced which include a different selected set of these details. It is intended that the following claims cover all possible example embodiments.

Supplementary, it is to be noted that "having" or "comprising" does not exclude other elements or steps, and that "a" or "an" does not exclude a plurality. In addition, it is to be noted that features or steps, which have been described above with reference to one of the above embodiment examples, may also be used in combination with other features or steps of other embodiment examples that have been described above. Reference numerals in the claims are not to be construed as limitations.

## Claims

1. A method (100) for operating a wind turbine (20),
wherein the wind turbine (20) has at least one component device (30; 64-1 - 64-6), of which an operational fitness is monitorable by a plurality of sensor devices (31 - 33; 61 - 63; 65-1 - 65-6) associated to the component device (30; 64-1 - 64-6), wherein each sensor device (31 - 33; 61 - 63; 65-1 - 65-6) is configured to measure an operational parameter of the component device (30; 64-1 - 64-6), wherein the operational parameter is indicative of the operational fitness of the component device (30; 64-1 - 64-6),
wherein the method (100) has the following steps:
grouping a plurality of sensor devices (31 - 33; 61 - 63; 65-1 - 65-6) associated to a component device (30; 64-1 - 64-6) of the wind turbine (20) in sensor categories including priority 1 and priority 2, and in particular doing so in preparation of, or for example during, an operation of a wind turbine (20), wherein priority 1 is attributed to a sensor device (31; 61) which is configured to measure, in particular directly, an operational parameter that is critical for an operational fitness of the component device (30; 64-1 - 64-6), wherein the component device (30; 64-1 - 64-6) is critical for the operational fitness of the wind turbine (20);
during operation of the wind turbine (20):
running (120) at least one predictive model for the component device (30; 64-1 - 64-6), and checking if the predictive model indicates an issue, which is capable to negatively affect the operational fitness of the component device (30; 64-1 - 64-6),
if (125, N) no issue is anticipated by the predictive model, switching off (130) any priority 2 sensor device (32; 62), while continuing to operate including for example to read out periodically any priority 1 sensor device (31; 61) .

2. The method (100) according to claim 1, further having, during operation of the wind turbine (20):
if (125, Y) an issue is anticipated by the predictive model, switching on (145) any priority 2 sensor device (32; 62).

3. The method (100) according to claim 1 or 2, further having, during operation of the wind turbine (20):
obtaining (110) weather data and/or weather forecast data at least for a forecast time period, and in particular doing so before running at least one predictive model for the component device (30; 64-1 - 64-6), wherein the data are critical for allowing or not a safe operation of the wind turbine (20); and
only if (115, Y) the weather data and/or the weather forecast data are such that a safe operation of the wind turbine (20) is allowable, and
if (125, N) no issue is anticipated by the predictive model, switching off (130) any priority 2 sensor device (32; 62), while continuing to operate including for example to read out periodically any priority 1 sensor device (31; 61) ;
in particular wherein the method further has:
if (115, N) the weather data and/or the weather forecast data are such that a safe operation of the wind turbine (20) is not allowable during the forecast time period, or
if (125, Y) an issue is anticipated by the predictive model during the forecast time period, switching on (145) any priority 2 sensor device (32; 62).

4. The method (100) according to any one of the claims 1 to 3, further having:
grouping (105) a plurality of sensor devices (31 - 33; 61 - 63; 65-1 - 65-6) associated to a component device (30; 64-1 - 64-6) of the wind turbine (20) in sensor categories including priority 1, priority 2, and priority 3, and in particular doing so in preparation of, or for example during, operation of the wind turbine (20),
wherein priority 2 is attributed to a sensor device (32; 62), which is configured to measure an operational parameter, which is critical for an operational fitness of the component device (30; 64-1 - 64-6), and of which a value can be derived, for example by a physical model, from a value and/or a course in time of the value of an operational parameter measured by an associated priority 1 sensor device (31; 61),
wherein priority 3 is attributed to a sensor device (33; 63), which is configured to measure an operational parameter, which is critical for an operational fitness of the component device (30; 64-1 - 64-6), and of which a value can be derived, for example by a physical model, from a value and/or a course in time of the value of the operational parameter measured by an associated priority 2 sensor device (32; 62) and optionally further from a value and/or a course in time of the value of an operational parameter measured by an associated priority 1 sensor device (31; 61); and
during operation of the wind turbine (20):
if (125, N) no issue is anticipated by the predictive model, further to switching off (130) any priority 2 sensor device (32; 62), switching off (135) any priority 3 sensor device (33; 63), while continuing to operate including for example to read out periodically any priority 1 sensor device (31; 61);
in particular wherein the method further has:
for any priority 3 sensor device (33; 63), which has been switched off, periodically, for example once per day, switching on (155) said priority 3 sensor devices (33; 63), performing a test whether said priority 3 sensor devices (33; 63) are capable to function properly, and switching off said priority 3 sensor devices (33; 63);
further in particular wherein the method further has:
for any priority 2 sensor device (32; 62), which has been switched off, periodically, for example once per day, switching on (160) said priority 2 sensor devices (32; 62), performing a test whether said priority 2 sensor devices (32; 62) are capable to function properly, and switching off said priority 2 sensor devices (32; 62).

5. The method (100) according to claim 3 and claim 4, further having:
if (125, N) the weather data and/or the weather forecast data are such that a safe operation of the wind turbine (20) is not allowable during the forecast time period, or if (125, Y) an issue is anticipated by the predictive model during the forecast time period, switching on (145) any priority 2 sensor device (32; 62), and switching on (150) any priority 3 sensor device (33; 63).

6. The method (100) according to any one of the claims 1 to 5, wherein the method has at least one of the following features:
- the step of running (120) at least one predictive model for the component device (30; 64-1 ... 64-6) of a wind turbine (20) has obtaining data on an operational fitness of a corresponding component device of another wind turbine located in a same or in another wind farm, wherein the other wind turbine is of a same type, in particular is equipped with corresponding component devices, as said wind turbine (20);
- the step of checking (125) if the predictive model indicates an issue further has checking if the predictive model indicates an issue during a forecast time period;
- the step of checking (125) if the predictive model indicates an issue further has checking if the component device (30; 64-1 - 64-6) has a remaining portion of a rated operational lifetime and/or has a maintenance or service interval prescribing maintenance or service work.

7. The method (100) according to any one of the claims 3 to 6, wherein the step of obtaining (110) weather data and/or weather forecast data at least for the forecast time period has:
obtaining wind speed data at least for the forecast time period, and/or
obtaining weather data and/or weather forecast data at least for the forecast time period relating to another wind turbine, wherein the other wind turbine is in the same wind farm (10) as said turbine (20) or is in a wind farm different from said wind farm (10) but, in particular meteorologically, related to said wind farm (10) .

8. The method (100) according to any one of the claims 1 to 7, wherein the method has at least one of the following features:
- the sensor device is a sensor device that is selected from the group that consists of a temperature sensor (31 - 33; 65-1 - 65-6), a strain sensor, a vibration sensor, an acceleration sensor, an electric power sensor, an electric current sensor, an electric voltage sensor, and an ambient wind speed sensor;
- the sensor device is a temperature sensor and the component device (30; 64-1 - 64-6) is a component device (30; 64-1 - 64-6) that is selected from the group that consists of a stator winding segment (64-1 - 64-6), a hydraulic unit for aligning a direction of a nacelle (22) of the wind turbine (20), a bearing for a rotor (23) of the wind turbine (20), an electric transformer of the wind turbine (20), a voltage converter of the wind turbine (20);
- the sensor device (31 - 33; 61 - 63; 65-1 - 65-6) is a temperature sensor (31 - 33; 61 - 63; 65-1 - 65-6) and the component device (30; 64-1 - 64-6) is a stator winding segment (64-1 - 64-6), wherein a stator unit (60) of an electric generator of the wind turbine (20) has a plurality of, for example at least six or more, stator winding segments (64-1, ... , 64-6), wherein each stator winding segment (64-1, ... , 64-6) is provided with an associated temperature sensor (65-1, ... , 65-6) for measuring a temperature of the stator winding segment (64-1, ... , 64-6), in particular a winding temperature, wherein a first plurality of stator winding segments (64-1, ... , 64-3) is coupled to a common first coolant circuit (66) in a serial arrangement and a second plurality of stator winding segments (64-4, ... , 64-6) is coupled to a common second coolant circuit (71) in a serial arrangement, wherein a coolant flow rate in the first coolant circuit (66) is different from a coolant flow rate in the second coolant circuit (71), and wherein the associated temperature sensors (65-1 - 65-6) are grouped in categories including priority 1, priority 2 and priority 3 according to the following criteria:
a temperature sensor (65-1, 61) is associated priority 1, if the sensor (61) is associated to a stator winding segment (64-1), of which the temperature is crucial to be monitored continuously, in particular if the stator winding segment (64-1) receives less coolant flow rate and/or has a higher temperature than other stator winding segments (64-2, 64-6) ;
a temperature sensor (65-3, 65-4, 65-6, 62) is associated priority 2, if the sensor (62) is associated to a stator winding segment (64-3, 64-4, 64-6) of which the temperature is nice to gather for monitoring purposes, but not crucial to be monitored continuously;
a temperature sensor (65-5, 63) is associated priority 3, if the sensor (63) is associated to a stator winding segment (64-5), of which the temperature is expected to remain in a desired temperature range throughout operation, in particular if the stator winding segment (64-5) receives a higher coolant flow rate and/or has a lower temperature than other stator winding segments (64-1, ... 64-4, 64-6).

9. The method (100) according to any one of the claims 1 to 8, wherein the component device (30) acts as a heat source and is coupled to a heat exchanger device (49) via a first, in particular primary cooling circuit (34), wherein the heat exchanger device (40) is coupled to a cooling device (50), for example an active or passive cooling device, via a second, in particular secondary cooling circuit (44), wherein the cooling device (50) is configured to act as a heat sink, and wherein the heat exchanger device (40) is configured to enable a heat transfer from the first cooling circuit (36) to the second cooling circuit (44).

10. The method (100) according to claim 9, having at least one of the following features:
a priority 1 sensor device (31) is thermally coupled to the component device (30) or to a portion of the first cooling circuit (36) located downstream of a coolant outlet (35) of the first cooling circuit (36) from the component device (30) ;
a priority 2 sensor device (32) is thermally coupled to a portion of the second cooling circuit (44) located downstream of a coolant outlet (45) of the second cooling circuit (44) from the heat exchanger device (40) or to a portion of the cooling device (50);
a priority 3 sensor device (33) is thermally coupled to a portion of the first cooling circuit (34) located upstream of a coolant inlet (36) of the first cooling circuit (34) into the component device (30).

11. A method (200) for operating a wind turbine (20) in a wind farm (10),
wherein the wind turbine (20) has at least one component device (30; 64-1 - 64-6), of which an operational fitness is monitorable by a plurality of sensor devices associated to the component device (30; 64-1 - 64-6), wherein each sensor device is configured to measure an operational parameter of the component device (30; 64-1 - 64-6), wherein the operational parameter is indicative of the operational fitness of the component device (30; 64-1 - 64-6),
wherein the wind farm (10) has a plurality of wind turbines (20) and is configured to be operated such that a first portion of the plurality of wind turbines (20) is each configured to operate as a type 1 wind turbine (24), which means that all sensor devices of a wind turbine (20) are switched on continuously including for example read out periodically, and a second portion of the plurality of wind turbines (20) is each configured to operate as a type 2 wind turbine (26), which means that at least one of the sensor devices of a wind turbine (20) is operable in a controlled manner in that the wind turbine (20) is operable according any one of the claims 1 to 10,
wherein the method (200) has the following steps:
for each wind turbine (20), deciding (205) on the basis of a geographical location of the wind turbine (20) in the wind farm (10), whether the wind turbine (20) shall be operated as a type 1 wind turbine (24) or can be operable as a type 2 wind turbine (26);
for each wind turbine (20), which is operable (210, Y) as a type 2 wind turbine (26):
running (230) at least one predictive model for a component device (30; 64-1 - 64-6), which is decisive for an operational fitness of the wind turbine (20), and checking (235) if the predictive model indicates an issue, which is capable to negatively affect the operational fitness of the component device (30; 64-1 - 64-6), and
if (235, N) no issue is anticipated by the predictive model, operating (250) the wind turbine (20) as a type 2 wind turbine (26).

12. The method (200) according to claim 11, further having:
if (235, Y) an issue is anticipated by the predictive model, operating the wind turbine (20) as a type 1 wind turbine (24).

13. The method (200) according to claim 12, further having:
for each wind turbine (20), which is operable (210, Y) as a type 2 wind turbine (26) and which is currently operating (250) as a type 1 wind turbine:
running (230) at least one predictive model for the component device (30; 64-1 - 64-6), which is decisive for the operational fitness of the wind turbine (20), and check (235) if the predictive model indicates an issue, which is capable to negatively affect the operational fitness of the component device (30; 64-1 - 64-6), and
if (235, N) no issue is anticipated by the predictive model, switching over the wind turbine (20) to be operated (240) as a type 2 wind turbine (26).

14. The method (200) according to any one of the claims 11 to 13, further having:
obtaining (220) weather data and/or weather forecast data at least for a forecast time period, and in particular doing so before running at least one predictive model for the component device (30; 64-1 - 64-6), wherein the data are critical for allowing or not a safe operation of the wind turbine (20); and
if (225, N) the weather data and/or the weather forecast data are such that a safe operation of the wind turbine (20) is not allowable during the forecast time period, switching over the wind turbine (20) to be operated (250) as a type 1 wind turbine (24);
in particular wherein the method (200) further has:
only if (225, Y) the weather data and/or the weather forecast data are such that a safe operation of the wind turbine (20) is allowable during the forecast time period, and
if (235, N) no issue is anticipated by the predictive model during the forecast time period, switching over the wind turbine (20) to be operated (240) as a type 2 wind turbine (26).

15. A wind turbine (20, 26), which is configured to be operated according a method (100, 200) according to any one of the claims 1 to 14.
